Europäisches Patentamt

**European Patent Office**

**Office européen des brevets**

(11) Publication number: **0 008 851**
**B1**

(12)

# EUROPEAN PATENT SPECIFICATION

(45) Date of publication of patent specification: 14.10.81

(21) Application number: **79301294.9**

(22) Date of filing: **04.07.79**

(51) Int. Cl.³: **B 62 M 9/10,** B 62 M 9/06, F 16 H 55/12

(54) Cycle sprocket.

(30) Priority: **07.07.78 JP 94131/78**

(43) Date of publication of application:
**19.03.80 Bulletin 80/6**

(45) Publication of the grant of the European patent:
**14.10.81 Bulletin 81/41**

(84) Designated Contracting States:
**BE DE FR GB IT**

(56) References cited:
FR - A - 2 376 021
GB - A - 2 005 363
GB - A - 2 005 778
GB - A - 2 005 779
US - A - 3 956 943
US - A - 4 009 621

(73) Proprietor: **SHIMANO INDUSTRIAL COMPANY LIMITED**
**77, 3-cho Oimatsu-cho Sakai-shi**
**Osaka (JP)**

(72) Inventor: **Ueno, Tadashi**
**No. 305, 4-2, 3-cho, Shinkanaoka-cho**
**Sakai-shi, Osaka (JP)**

(74) Representative: **Szczuka, Jan Tymoteusz et al,**
**Cruikshank & Fairweather 19 Royal Exchange**
**Square**
**Glasgow, G1 3AE Scotland (GB)**

Courier Press, Leamington Spa, England.

Cycle sprocket

This invention relates to a sprocket for a cycle, which is formed of material, such as aluminum alloy, of low wear-resistance, and comprises a sprocket body having a plurality of teeth circumferentially disposed on the outer periphery of the body. This invention is particularly applicable to sprockets suitable for use in multisprocket arrangements, especially those at the crank means of a cycle.

Generally, a multi-stage sprocket with two or more sprockets having different numbers of teeth is mounted on a rear hub or crank means of the bicycle so that a drive chain, which is movable axially of the sprocket by means of a derailleur, is switched to a desired sprocket to thereby transmit the driving force to the rear cycle wheel at a given gear ratio.

It has been attempted to make sprockets for use with cycle crank means, i.e. sprockets of relatively large diameter and having 40 to 50 teeth of lightweight material, such as aluminum alloy, for purposes of reducing weight and economy. However lightweight materials have reduced wear-resistance, so that multi-stage sprockets of lightweight material wear out their teeth quickly, especially, those teeth which first catch the chain when changing gear so that their poor durability becomes a problem. The sprockets are therefore normally formed of material, such as iron, of greater wear-resistance in order to improve the durability, though with the penalty of increased weight and expense. As a result, it has not previously been possible to provide sprockets having the advantages of the use of lightweight materials and which at the same time are free from the abovementioned defects.

It has also been previously known from U.S. Paten Specification No. 4,009,621 to provide such a sprocket with a recessed peripheral portion extending radially inwardly from the sprocket body outer periphery so that at least one sprocket tooth is omitted, in order to facilitate mounting of a discrete sprocket rim portion on a central sprocket body portion.

It is an object of the present invention to provide a sprocket with reduced tooth wear and good durability while still employing material of reduced wear-resistance.

The inventor has observed that when a sprocket of material of low wear-resistance is used in a multi-stage sprocket, wearing of the teeth occurs largely on those teeth which first catch the chain during gear-changing. Accordingly, he has overcome the above problem by providing the sprocket body with a toothed member having at least one tooth for replacing at least one omitted tooth, said toothed member having a greater wear-resistance than said sprocket body and being provided in a recessed peripheral portion extending radially inwards of the sprocket body outer periphery so that at least one of the plurality of teeth on the outer periphery of the sprocket body is omitted.

Thus the present invention provides a sprocket for a cycle which sprocket is formed of material of low wear-resistance and comprises a sprocket body having a plurality of teeth disposed circumferentially on the outer periphery of said body, and a recessed peripheral portion extending radially inwardly from the sprocket body outer periphery so that at least one of said plurality of teeth on said outer periphery of said body is omitted. characterized in that said recessed portion is provided with a toothed member having at least one tooth for replacing said at least one omitted tooth, said toothed member having a greater wear-resistance than said sprocket body.

In a multi-sprocket arrangement having adjacent sprockets of smaller and larger diameter, the positional relationship between the teeth of the adjacent sprockets which are generally opposite each other changes from one tooth to the next due to the fact that the sprockets have different numbers of teeth. Since the chain tends to catch most easily on the sprocket to which it is being changed when the tooth on the latter sprocket is in the correct position relative to the chain for engaging it i.e. the distance between said tooth and the tooth on the other sprocket at which the chain disengages, corresponds to an integral number of chain link lengths, chain engagement tends to take place most often at certain particular teeth which are accordingly subject to the greatest wear. Thus in a normal multi-sprocket sprocket arrangement it is these teeth which should most advantageously be replaced by teeth of more wear-resistant material. Nevertheless it is also possible to provide certain sprocket teeth which particularly facilitate chain engagement and/or teeth which particularly facilitate chain disengagement either at said naturally occurring points or at other points. In such cases the easy-engagement type teeth are formed of hardened material.

When a plurality of sprockets are combined to form the multi-stage sprocket, the teeth will have more opportunities to catch the chain, whereby use of the combination of the plurality of the aforesaid sprockets can improve the durability of teeth.

Although the teeth on the toothed member may be formed similarly to those on the sprocket body, advantageously one or more may be formed as easy-engagement type teeth as hereinafter described in further detail so that wear is reduced and durability still further increased.

Various ways of carrying out the invention are described in detail below with reference to the drawings which illustrate only some preferred specific embodiments, in which:

Fig. 1 is a front elevation of a sprocket of the invention;

Fig. 2 is a transverse sectional view taken on line II—II in Fig. 1;

Fig. 3 is an enlarged sectional view taken on line III—III in Fig. 1;

Fig. 4 is a partially enlarged perspective view of the sprocket body;

Fig. 5 is a corresponding perspective view of a toothed member;

Figs. 6 to 9 are enlarged side detail views of different embodiments of toothed member teeth;

Fig. 10 is an enlarged front elevation detail view showing easy disengagement type sprocket teeth;

Figs. 11 to 13 are enlarged side detail views of different embodiments of sprocket teeth of easy disengagement type; and

Fig. 14 is an enlarged detail side view illustrating engagement of a cycle chain with two adjacent sprockets of a multi-sprocket device including a sprocket of the invention.

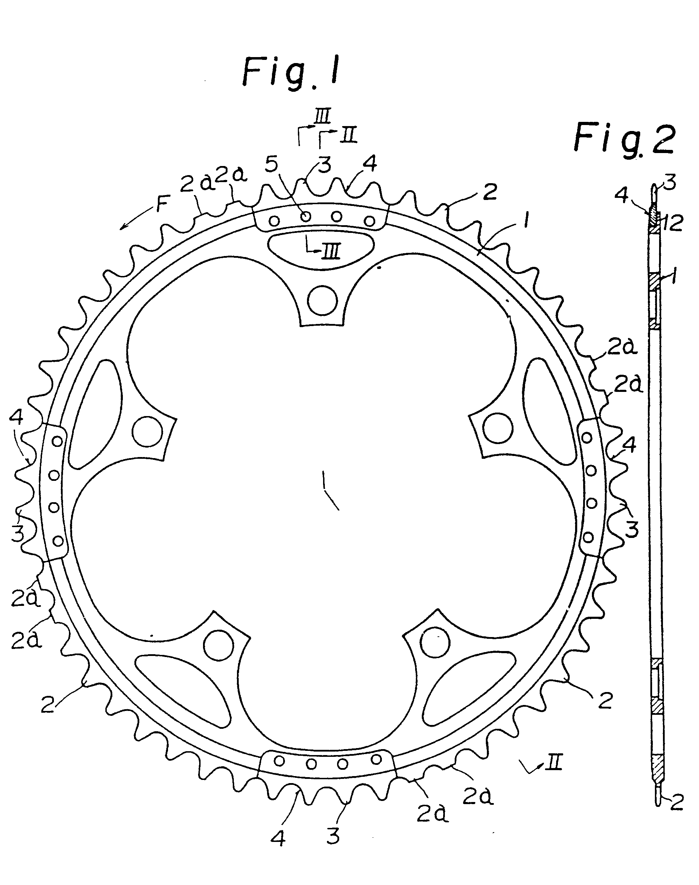

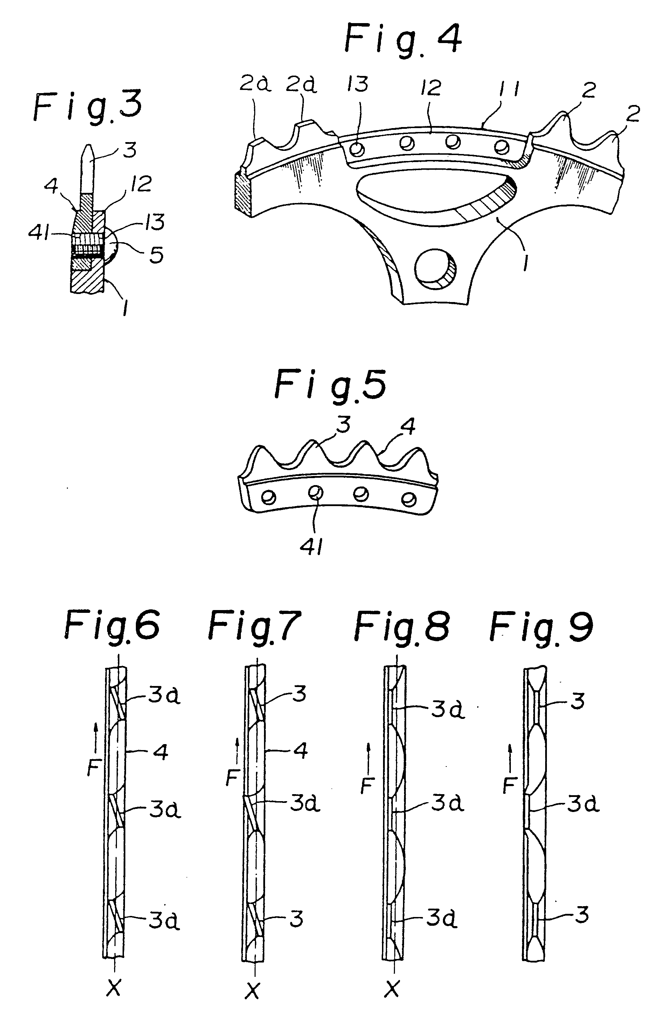

In Fig. 1 is shown an annular sprocket body having a central aperture and at its outer periphery a plurality of teeth 2 circumferentially disposed and spaced at regular intervals. The sprocket body 1 is formed of lightweight material, such as aluminum alloy, and formed integrally with the teeth 2 e.g. by means of die casting. A peripheral portion 11 of the sprocket body 1 corresponding to one or more adjacent teeth (4 teeth in this case) is recessed radially inwardly of the outer periphery of the sprocket body 1 to the base portions of the teeth to form a teeth-omitted portion 11 as shown in Fig. 4. The peripheral portion 11 is of reduced thickness at its radially inward edge so as to provide a toothed-member mounting portion 12 on which may be mounted a toothed member 4 having teeth 3 corresponding in number to those omitted and thus compensating therefor.

The toothed member 4 is made of a wear-resistant material and is of lesser thickness than the toothed portion of the sprocket body 1. Pairs of corresponding threaded bores 41 and through bores 13 are provided in the toothed member 4 and the toothed member mounting portion 12 respectively and screw means 5 extend through the bores 13 and are screwed into the threaded bores 41, thereby detachably mounting the toothed member 4 on the sprocket body 1.

The toothed member 4 is preferably detachably mounted as above, but could, if desired, be instead fixed permanently to the sprocket body 1 by means of welding, through connecting pins, or other suitable means. Also the toothed member mounting portion 12 on the sprocket body 1 need not necessarily be made of lesser thickness.

It is preferred that the teeth 3 of the toothed member 4 are formed so as to be of easy engagement type so that the chain is switched more readily from the smaller diameter sprocket to the larger diameter one, as this improves gear changing efficiency.

Figs. 6 to 9 show a number of different kinds of such easy engagement type teeth. In a first type shown in Fig. 6 at least one tooth 3a among the teeth 3 of the toothed member 4 is arranged to extend obliquely at its tip with respect to the central plane of the member 4 extending through the teeth 3 so that the thin tooth tip extends laterally across the full thickness of the teeth (at their base). Referring to the driging rotation direction F of the sprocket body 1 the teeth 3a is slanted leftwards looking from the rear of the tooth 3a with respect to said driving direction F.

The reason for this form of construction is that when the chain is switched from the smaller diameter sprocket to the larger diameter one, gear changing efficiency and tooth wear can become a particular problem. Accordingly the tip of each tooth 3a is slanted towards the smaller diameter sprocket (leftwards in Fig. 6).

In a second type shown in Fig. 7 at least one tooth 3a of the toothed member 4 has its tip arranged obliquely as above but with an additional slight displacement to one side of the central plane X of member 4 so that the front end of the tip in the driving rotation direction F projects outwardly of the other sprocket teeth to an extent such that the chain, when switched from one sprocket to the other is readily caught by the projecting tip.

In a third type at least one tooth 3a on the toothed member 4 is as shown in Fig. 8, chamfered at the outside with respect to the smaller diameter sprocket so that the tip of tooth 3a is laterally displaced towards the smaller diameter sprocket (leftwards in Fig. 8) with respect to the central plane X extending through the teeth 3.

In a fourth type, at least one tooth 3a on the toothed member 4 is, as shown in Fig. 9, chamfered on its side remote from the smaller diameter sprocket (not shown) i.e. the right side in Fig. 9 and laterally displaced leftwards from the central plane X extending through the teeth 3, so as to project axially outwardly with respect to the other sprocket teeth 3 towards the smaller diameter sprocket (i.e. leftwards in Fig. 9).

On the other hand, it is also adantageous if one or more adjacent teeth 2 (two are shown) on the sprocket body 1 adjacent the toothed member 4 are formed so as to be of easy disengagement type for facilitating disengagement of the chain from the teeth when changing gear, thereby improving gear changing efficiency especially as regards changing gear from the larger diameter sprocket to the smaller one.

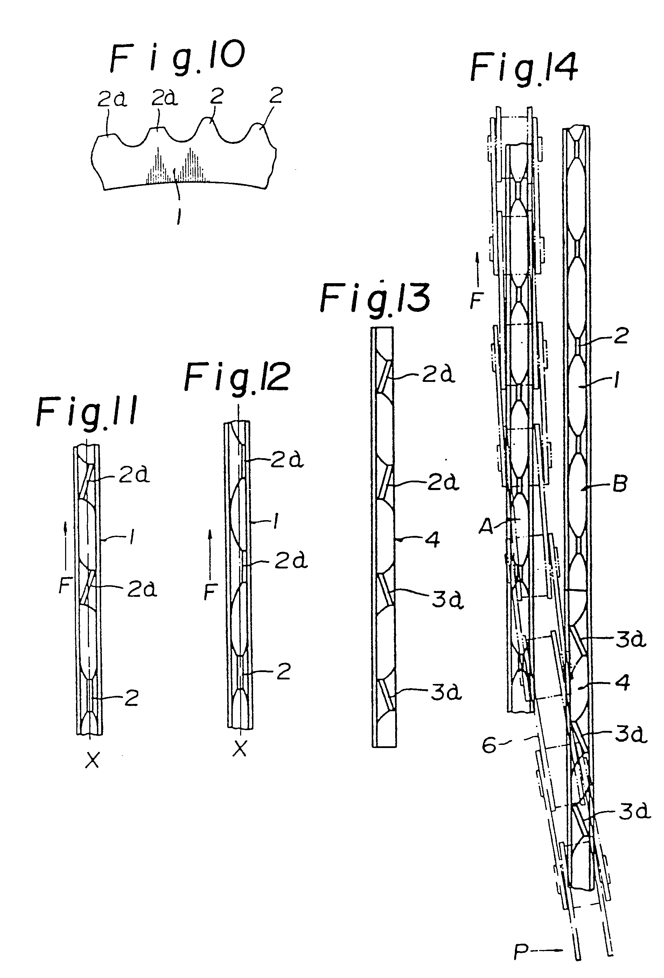

The above easy disengagement type teeth may be formed as shown in Figs. 10 to 13. In a first easy disengagement type tooth, the tips of the teeth 2 are of reduced height as shown in Figs. 1 and 10.

In a second easy disengagement type tooth shown in Fig. 11, the teeth 2 are arranged to extend obliquely at the tips thereof with respect to the central plane $X$ extending through the sprocket body 1 so that the front end of the tip in the driving rotation direction $F$ of the sprocket body 1 is inclined rightwards when viewed from the rear end of the tip with respect to said driving direction $F$. Thus the rear end of the tip of each tooth $2a$ in the rotation direction $F$ is inclined towards the smaller diameter sprocket (not shown) (i.e. leftwards in Fig. 11).

In a third easy disengagement type tooth shown in Fig. 12, the teeth 2 are chamfered on their sides facing the smaller diameter sprocket (not shown).

The abovementioned easy disengagement type teeth are not restricted to any particular position. It is preferable though that one or more conventional teeth are provided behind the teeth $2a$ of easy disengagement type in the chain travelling direction (in the arrow $F$ direction in Fig. 1), on the toothed member 4 of said material of greater wear-resistance and between the easy engagement and easy disengagement teeth $3a$, $2a$. The reason for this is that when during switching the chain from the larger diameter sprocket to the smaller diameter one the chain, disengaging from the teeth of larger diameter sprocket, contact with the teeth closely behind the chain-disengaging teeth $2a$ in the chain travelling direction $F$ causes particular wear to occur. In this instance, the teeth at the toothed member may more readily be formed in conventional manner i.e. not of the aforesaid engagement type.

In addition, the optimum numbers of easy engagement type teeth $3a$ on the toothed member 4 and of teeth $2a$ of easy disengagement type depends upon the size of the sprocket body 1.

Two or more sprockets constituted as above described and with different numbers of teeth may be combined and mounted at the crank means (or the rear hub) to be used to provide the front gear change. The chain may be shifted in conventional manner by derailleur so as to be switched to a desired sprocket so that the driving force from pedalling is transmitted to the rear wheel at a predetermined gear ratio.

The gear changing efficiency is a particular problem during shifting of the chain from the smaller diameter sprocket to the larger diameter one, as the chain engages with the teeth of the larger sprocket and disengages from the teeth of the smaller sprocket. Hence, in the case of a front gear change, usually having two sprockets with different numbers of teeth, a sprocket of the invention is advantageously employed for the high speed larger diameter sprocket whilst a conventional sprocket would be adequate for the low speed smaller diameter sprocket.

In the case of a rear gear change using a multi-sprocket arrangement having from 3 to 5 sprockets with different numbers of teeth the smallest-diameter high speed-sprocket may be formed as a conventional sprocket but advantageously the others are all formed as sprockets of the present invention.

The engagement of the driving chain with a sprocket of the invention in use thereof will now be described in detail.

Referring to Fig. 14, the movable member of the derailleur (not shown) moves the chain 6 axially with respect to the two adjacent sprockets $A$, $B$ in the direction $P$ from the smaller diameter sprocket $A$ to the larger diameter one $B$, so that the chain 6 remains in part on the front side of the sprocket $A$ in the driving rotation direction $F$ thereof and is over-shifted in part by the derailleur with respect to the sprocket $B$, extending obliquely between the two sprockets $A$, $B$.

At this stage, in the event that the toothed member 4 is disposed at a portion of the larger sprocket $B$ with which the chain is about to engage, the teeth 3 of the toothed member 4 of wear-resistant material are able to catch the chain, thereby considerably reducing wear of the sprocket teeth 2, 3. Furthermore, by the use of teeth $3a$ of easy engagement type on the toothed member 4 the latter can immediately catch the chain without any interference, resulting in improved gear changing efficiency and substantially avoiding tooth-wear resulting from interference of the chain with the larger diameter sprocket.

On the other hand, when the chain 6 is switched from the larger diameter sprocket $B$ to the smaller diameter sprocket $A$, the teeth $2a$ of easy disengagement type at the sprocket $B$ enable the chain 6 to be disengaged quickly from the sprocket $B$, resulting in quick switching of the chain and improved gear changing efficiency.

In addition it may be noted that the aforesaid teeth $2a$ of easy disengagement type, may be formed either on the sprocket body 1 proper or in a separate toothed member 4 of wear-resistant material and attached to the sprocket body 1. Furthermore the teeth $3a$ of easy engagement type and those $2a$ of disengagement type, may be both formed in the same toothed member 4 made of wear-resistant material as shown in Fig. 13.

As will be understood from the above description, a predetermined number of teeth 3 among the large plurality of teeth 2 at the outer periphery of the sprocket body 1 is provided by a toothed member 4 of wear-resistant material. The teeth 3 of the toothed member(s) 4 are disposed desirably at a position on the sprocket body 1 coincident with the point on the chain where the chain is about to engage the teeth of the larger diameter sprocket, the chain's engagement point being located at a distance coincident with an integral multiple of the chain pitch from the point where the chain disengages from the smaller diameter sprocket. In other words, the toothed member is disposed at a position where the teeth have greatest opportunity for engaging the chain. In this way wear of teeth is substantially reduced. As a result, the sprocket body may be formed mostly of lightweight material, such as aluminum alloy, so that the sprocket is light in weight and inexpensive to produce while without loss of durability. Even when the teeth of the toothed member do become worn after prolonged use, the toothed member alone is readily renewable, thereby further contributing to reduced costs.

## Claims

1. A sprocket for a cycle which sprocket is formed of material of low wear-resistance and comprises a sprocket body (1) having a plurality of teeth (2) disposed circumferentially on the outer periphery of said body (1), and a recessed peripheral portion (11) extending radially inwardly from the sprocket body outer periphery so that at least one of said plurality of teeth (2) on said outer periphery of said body (1) is omitted, characterized in that said recessed portion (11) is provided with a toothed member (4) having at least one tooth (3) for replacing said at least one omitted tooth, said toothed member (4) having a greater wear-resistance than said sprocket body (1).

2. A sprocket as claimed in claim 1, suitable for use in a multisprocket arrangement, characterized in that said at least one said tooth (3a) on said toothed member (4) is formed so as to be of an easy engagement type for easily engaging a drive chain when chaning gear.

3. A sprocket as claimed in claim 2, characterized in that said at least one easy engagement type tooth (3a) comprises a tooth on said toothed member (4) arranged to extend obliquely at its tip with respect to the central plane (X) extending through said toothed member (4) so that the front end of said tip in the driving rotation direction (F) of said sprocket body (1) is inclined leftwards when viewed from the rear of the tooth (3a) with respect to said driving rotation direction (F).

4. A sprocket as claimed in claim 2, characterized in that said at least one easy engagement type tooth (3a) is a tooth laterally displaced, from the central plane (X) extending through the sprocket teeth (3), leftwards when viewed from the rear end of the tooth (3a) with respect to the driving rotation direction (F) of said sprocket body (1).

5. A sprocket as claimed in any one of claims 1 to 4 suitable for use in a multisprocket arrangement characterized in that there is provided at least one tooth (2a) which is formed so as to be of an easy disengagement type so that a chain engaged with said sprocket in use thereof is easily disengageable therefrom at said at least one tooth (2a).

6. A sprocket as claimed in claim 5, characterized in that said at least one easy disengagement type tooth comprises a tooth (2a) of reduced height.

7. A sprocket as claimed in claim 5, characterized in that said at least one easy disengagement type tooth (2a) is arranged to extend obliquely at its tip with respect to the central plane (X) extending through the sprocket body (1) so that the front end of said tip in the driving rotation direction (F) of said sprocket body (1) is inclined rightwards when viewed from the rear end of the tip with respect to said driving direction (F).

8. A sprocket as claimed in claim 5, characterized in that said at least one easy disengagement type tooth (2a) is a tooth laterally displaced, from the central plane (X) extending through the sprocket teeth (2) rightwards when viewed from the rear end of the tooth (2a) with respect to the driving rotation direction (F) of said sprocket body (1).

9. A sprocket as claimed in any one of claims 5 to 8 characterized in that said at least one easy disengagement type tooth is provided adjacent the toothed member (4).

10. A sprocket as claimed in any one of claims 5 to 8 characterized in that said at least one easy disengagement type tooth is provided by one of the teeth (3) of the toothed member (4).

11. A sprocket as claimed in any one of claims 2 to 10 in combination with a smaller diameter sprocket (A) in a multisprocket arrangement characterized in that the teeth (3) of the toothed member (4) are disposed at a position on the sprocket body (1) coincident with a point on the chain (6) where the chain (6) is about to engage the teeth (3) of the sprocket (B), the engagement point being located at a distance coincident with an integral multiple of the chain pitch from a point where the chain (6) disengages from the smaller diameter sprocket (A) in use of the multisprocket arrangement.

## Revendications

1. Pignon pour cycle, fabriqué en matière présentant une faible résistance à l'usure et comprenant un corps de pignon (1) portant une pluralité de dents (2) disposées circonférentiellement sur la périphérie extérieure de ce corps (1), une partie périphérique évidée (11) s'étendant radialement vers l'intérieur à partir de la périphérie extérieure du corps de pignon de telle manière qu'au moins une dent de la pluralité de dents (2) sur la périphérie extérieure du corps (1) soit supprimée, lequel pignon est caractérisé en ce que la partie évidée (11) est pourvue d'une pièce dentée (4) ayant au moins une dent (3) pour remplacer au moins une dent supprimée susdite, la pièce dentée (4) ayant une résistance à l'usure supérieure à celle du corps de pignon (1).

2. Pignon selon la Revendication 1, apte à être utilisé dans un agencement à plusieurs pignons, caractérisé en ce qu'au moins une dent (3a) sur la pièce dentée (4) est formée de façon à avoir une configuration du type à engagement facile, afin de se mettre facilement en prise avec une chaîne d'entraînement lorsqu'on change de vitesse.

3. Pignon selon la Revendication 2, caractérisé en ce que ladite dent (3a) au moins, du type à engagement facile, est une dent portée par la pièce dentée (4) et agencée de façon à ce que son sommet soit disposé en oblique par rapport au plan central (X) qui traverse la pièce dentée (4), l'extrémité avant de ce sommet, dans la direction de rotation d'entraînement (F) du corps de pignon (1), étant inclinée vers la gauche lorsqu'on regarde depuis l'arrière de la dent (3a) par rapport à la direction (F) de rotation d'entraînement.

4. Pignon selon la Revendication 2, caractérisé en ce que la dent (3a) au moins, du type à engagement facile, est une dent décalée latéralement par rapport au plan central (X) qui traverse les dents (3) du pignon, vers la gauche lorsqu'on regarde depuis l'extrémité arrière de la dent (3a), par rapport à la direction de rotation d'entraînement (F) du corps de pignon (1).

5. Pignon selon l'une quelconque des Revendications 1 à 4, apte à être utilisé dans un agencement à plusieurs pignons, caractérisé en ce qu'il comporte au moins une dent (2a) qui a une configuration du type à dégagement facile, de façon à ce qu'une chaîne en prise avec ce pignon pendant son fonctionnement puisse facilement s'en dégager au passage de ladite dent (2a) au moins.

6. Pignon selon la Revendication 5, caractérisé en ce que ladite dent (2a) au moins, du type à dégagement facile, est une dent de hauteur réduite.

7. Pignon selon la Revendication 5, caractérisé en ce qu'au moins une dent (2a) à dégagement facile, est disposée de façon à ce que son sommet soit en oblique par rapport au plan central (X) qui traverse le corps de pignon (1), l'extrémité avant de ce sommet, dans la direction (F) de rotation d'entraînement du corps de pignon (1), étant inclinée vers la droite lorsqu'on regarde depuis l'extrémité arrière du sommet, par rapport à la direction d'entraînement (F).

8. Pignon selon la Revendication 5, caractérisé en ce qu'au moins une dent (2a) à dégagement facile, est une dent décalée latéralement par rapport au plan central (X) qui traverse les dents (2) du pignon, vers la droite lorsqu'on regarde depuis l'extrémité arrière de la dent (2a), par rapport à la direction (F) de rotation d'entraînement du corps de pignon (1).

9. Pignon selon l'une quelconque des Revendications 5 à 8, caractérisé en ce qu'au moins une dent du type à dégagement facile est prévue à proximité de la pièce dentée (4).

10. Pignon selon l'une quelconque des Revendications 5 à 8, caractérisé en ce qu'au moins une dent du type à dégagement facile est constituée par une des dents (3) de la pièce dentée (4).

11. Pignon selon l'une quelconque des Revendications 2 à 10, associé à un pignon (A) de plus petit diamètre dans un agencement à pignons multiples, caractérisé en ce que les dents (3) de la pièce dentée (4) sont situées dans une position, sur le corps de pignon (1), qui coïncide avec un point sur la chaîne (6) où la chaîne (6) doit venir en prise avec les dents (3) du pignon (B), ce point d'engagement étant situé à une distance qui correspond à un multiple entier du pas de chaîne par rapport à un point où la chaîne (6) se dégage du pignon (A) de plus petit diamètre pendant le fonctionnement de l'agencement à plusieurs pignons.

**Patentansprüche**

1. Fahrradkettenrad aus einem Werkstoff geringer Verschleissfestigkeit, bestehend aus einem Kettenkörper (1) mit einer Mehrzahl von peripher auf dem Aussenumfang dieses Körpers (1) angeordneten Zähnen (2) und einem abgesetzten, sich von Aussenumfang des Kettenradkörpers nach innen erstreckenden Umfangsteil (11), sodass mindestens einer der besagten Mehrzahl von Zähnen (2) auf dem Aussenumfang des Körpers (1) weggelassen ist, dadurch gekennzeichnet, dass dieser abgesetzte Teil (11) mit einem gezähnten Glied (4) mit mindestens einem Zahn (3) zum Ersatz des mindestens einen, weggelassenen Zahns versehen ist, wobei dieses gezähnte Glied (4) eine höhere Verschleissfestigkeit aufweist als jener Kettenradkörper (1).

2. Kettenrad nach Anspruch 1, welches zur Verwendung in einer Mehrfachkettenradanordnung geeignet ist, dadurch gekennzeichnet, dass mindestens ein solcher Zahn (3a) auf besagtem gezähnten Glied (4) so ausgebildet ist, dass er leicht eingriffsfähig ist, um beim Gangwechsel leicht mit der Antriebskette in Eingriff zu kommen.

3. Kettenrad nach Anspruch 2, dadurch gekennzeichnet, dass dieser mindestens eine leicht eingriffsfähige Zahn (3a) einen Zahn auf jenem gezähnten Glied (4) darstellt, der an seiner Spitze bezüglich der durch dieses gezähnte Glied (4) verlaufenden Mittelebene (X) schräg angeordnet ist, sodass das Vorderende dieser Spitze in der Antriebsdrehrichtung (F) des besagten Kettenradkörpers (1), von der Rückseite des Zahns (3a) gesehen, gegenüber dieser Antriebsdrehrichtung (F) nach links geneigt ist.

4. Kettenrad nach Anspruch 2, dadurch gekennzeichnet, dass dieser mindestens eine leicht eingriffsfähige Zahn (3a) ein Zahn ist, der von der durch die Kettenradzähne (3) verlaufenden Mittelebene (X), vom Hinterende des Zahns (3a) gesehen, gegenüber der Antriebsdrehrichtung (F) des besagten Kettenradkörpers (1) seitlich nach links versetzt ist.

5. Kettenrad nach einem der Ansprüche 1 bis 4, welches zur Verwendung in einer Mehrfachkettenradanordnung geeignet ist, dadurch gekennzeichnet, dass mindestens ein so ausgebildeter Zahn (2a) vorgesehen ist, dass er leicht ausrückbar ist, damit eine mit diesem Kettenrad bei dessen Gebrauch in Eingriff stehende Kette an diesem mindestens einem Zahn (2a) leicht ausgerückt werden kann.

6. Kettenrad nach Anspruch 5, dadurch gekennzeichnet, dass dieser mindestens eine leicht ausrückbare Zahn einen Zahn (2a) verringerter Höhe darstellt.

7. Kettenrad nach Anspruch 5, dadurch gekennzeichnet, dass dieser mindestens eine leicht ausrückbare Zahn (2a) an seiner Spitze bezüglich der durch den Kettenradkörper (1) verlaufenden Mittelebene (X) schräg angeordnet ist, sodass das Vorderende dieser Spitze in der Antriebsdrehrichtung (F) dieses Kettenradkörpers (1), von der Rückseite der Spitze gesehen, gegenüber dieser Antriebsdrehrichtung (F) nach rechts geneigt ist.

8. Kettenrad nach Anspruch 5, dadurch gekennzeichnet, dass dieser mindestens eine leicht ausrückbare Zahn (2a) ein Zahn ist, der von der durch die Kettenradzähne (2) verlaufenden Mittelebene (X), vom Hinterende des Zahns (2a) gesehen, gegenüber der Antriebsdrehrichtung (F) des besagten Kettenradkörpers (1) seitlich nach rechts versetzt ist.

9. Kettenrad nach einem der Ansprüche 5 bis 8, dadurch gekennzeichnet, dass dieser mindestens eine leicht ausrückbare Zahn neben dem gezähnten Glied (4) vorgesehen ist.

10. Kettenrad nach einem der Ansprüche 5 bis 8, dadurch gekennzeichnet, dass dieser mindestens eine leicht ausrückbare Zahn als einer der Zähne (3) des gezähnten Glieds (4) vorgesehen ist.

11. Kettenrad nach einem der Ansprüche 2 bis 10 in Verbindung mit einem Kettenrad (A) kleineren Durchmessers in einer Mehrfachkettenradanordnung, dadurch gekennzeichnet, dass die Zähne (3) des gezähnten Glieds (4) auf dem Kettenradkörper (1) an einer Stelle angeordnet sind, die mit einem Punkt auf der Kette (6) zusammenfällt, wo die Kette (6) gerade mit den Zähnen (3) des Kettenrads (B) in Eingriff kommt, wobei der Eingriffspunkt in einem mit einem ganzzahligen Vielfachen der Kettenteilung übereinstimmenden Abstand von dem Punkt liegt, wo die Kette (6) im Gebrauch der Mehrfachkettenradanordnung aus dem Kettenrad (A) kleineren Durchmessers ausgerückt wird.

# Fig. 1

# Fig. 2

# Fig. 4

# Fig. 3

# Fig. 5

# Fig.6  Fig.7  Fig.8  Fig.9

Fig.10

Fig.14

Fig.13

Fig.12

Fig.11